# EUROPEAN PATENT APPLICATION

(11) **EP 1 411 148 A1**
(43) Date of publication of application: **21.04.2004**
(21) Application number: 02405882.8
(22) Date of filing: 15.10.2002
(51) Int. Cl.: C23C 28/00, C23C 4/02, C23C 28/02

(54) **Method of depositing a MCrALY-coating on an article and the coated article**

(71) Applicant: ALSTOM Technology Ltd, 5400 Baden (CH)
(72) Inventor: Duda, Dr Thomas, 5415 Nussbauman (CH); Jung, Dr. Arnd, 5415 Nussbaumen (CH); Khan, Dr.Abdus S., 5408 Ennetbaden (CH)

(57) **Abstract**

A method of depositing a coating on top of an article (1) comprising the steps of depositing a layer of MCrAlY (7) and depositing a layer of β-NiAl (6). The layer of β-NiAl (5) is deposited on top of the external surface of the article (1) or on top of the MCrAlY-coating (7), whereby the external layer of both layers is the thinner of the two layers. The disclosed coating improves the Thermal-Mechnical-Fatigue (TMF) Life of the article (1).

## Description

### FIELD OF INVENTION

The invention relates to a method of depositing a MCrAlY-coating on an article according to claim 1 and to a coated article according to claim 6.

### STATE OF THE ART

Components designed for the use in the area of high temperature, e.g. blades or vanes of a gas turbine, are usually coated with environmentally resistant coatings. The coating protects the base material against corrosion and oxidation due to the thermal effect of the hot environment. Most turbine components are coated for the protection from oxidation and/or corrosion with, for example, a MCrAlY coating (base coat) and some are also coated with a Thermal Barrier Coating (TBC) for thermal insulation.

MCrAlY protective overlay coatings are widely known in the prior art. They are a family of high temperature coatings, wherein M is selected from one or a combination of iron, nickel and cobalt. As an example US-A-3,528,861 or US-A-4,585,481 are disclosing such kind of oxidation resistant coatings.

There are two types of MCrAlY based on composition and microstructre: γ/γ' and γ/β. The field of γ/β-coatings have been an active area of research and a series of patents has been issued. E.g. a NiCrAlY coating is described in US-A-3,754,903 and a CoCrAlY coating in US-A-3,676,058 while US-A-4,346,137 discloses an improved high temperature fatigue resistance NiCoCrAlY coating. US-A-4,419,416, US-A-4,585,481, RE-32,121 and US-A-A-4,743,514 describe MCrAlY coatings containing Si and Hf. US-A-4,313,760 discloses a superalloy coating composition with good oxidation, corrosion and fatigue resistance. Further examples of development of oxidation resistant MCrAlY coatings are cited here: US-A-5,035,958, US-A-5,154,885, US-A-5, 455,119, US-A-6,280,857, US-A-6, 207,297 and US-A-6, 221,181.

In contrast to the γ/β-coatings, the γ/γ'-type of MCrAlY coatings, known e.g. from US-A-4,973,445, are relatively new. The unique feature of this type of γ/γ'-coatings is that their thermal expansion mismatch is close to zero in combination with a high ductility, what make these coatings more resistant to thermal fatigue. However the limitations are the low aluminum content and hence their low reservoir of aluminum.

The field of γ/γ'-type of MCrAlY coatings, known e.g. from US-A-4,973,445, are limited. The interesting feature of this type of coatings is that they have low thermal expansion coefficient and a high ductility, that make these coatings more resistant to thermal fatigue. However the limitation of these coating is their low aluminum content. Due to repeated spalling of oxides during thermal cycling the γ/γ'-coating is unable to sustain the alumina growth.

The development in 1980's in MCrAlY was primarily focused towards improving the oxidation resistance of MCrAlY via, for example, by over aluminising. The approach consists of deposition of MCrAlY by plasma spraying i.e. APS, VPS, LPPS, HVOF or by EB-PVD and then enriching the surface of MCrAlY by aluminising. For example, US-A-3,873,347 and US-A-4,080,486 deposited MCrAlY to a thickness in the range from 75 to 125 µm by EB-PVD and aluminised the MCrAlY to a thickness of 25 to 50 µm. While US-A-4,005,989, first aluminized the substrate followed by MCrAlY deposition. The MCrAlY coating thickness in this case was from 25 to 125 µm while the aluminide layer thickness ranged from 25 to 62 µm. The Al content in the aluminide was in the range from 22 to 36 percent.

In yet another patent, US-A-4,910,092, deposited first a MCrAlY coatings by plasma spraying and then over aluminised it by a pack process. The thickness of the MCrAlY coating ranged approximately from 12 to 75 µm while the aluminised thickness ranged from 25 to 100 µm. The coating system exhibited improved oxidation resistance and thermal fatigue resistance. The aluminised layer had aluminum content in the range from 21 to 35 percent.

US-A-6,129,991 used a Chemical Vapor Deposition (CVD) method to aluminize the MCrAlY surface, the CVD process forms aluminide coatings free of P and S contamination known to adversely affect the oxidation resistance of coatings. The aluminide coating containing Hf, Zr and Si was also deposited by CVD. The thickness of the aluminide overcoat was from 12 to 100 µm.

There are also references in the literature in improving the fatigue resistance of coatings. The approach consists of modifying the composition of coatings to reduce the thermal expansion mismatch between the coating and the substrate. For example, US-A-4,758,480 developed coatings by modifying the composition of the superalloy substrate. The coatings had thermal expansion coefficient close to the substrate, hence had a low thermal expansion mismatch and showed a higher fatigue resistance compared to a typical MCrAlY coating. In a separate patent, US-A-4, 346,137, Pt and/or Rh was added to MCrAlY to reduce the thermal expansion of the coatings and the modified coatings showed higher fatigue resistance.

Reducing the thermal expansion mismatch between the coating and the substrate had a beneficial effect in improving the fatigue resistance of coatings; yet there is another approach to further enhance the fatigue resistance - this is by using a relatively thin coating. For example, in industrial gas turbine engines where the components are expected to run thousands of hours, the coating thickness used is generally in the range of 350 to 650 µm in contrast to 100 to 200 µm coatings for aircraft turbine blades and vanes. A lower coating thickness in industrial gas turbine blades and vanes will provide a benefit towards a fatigue life. However, one would like to have a process with no line of sight with good control in coating thickness and is able to coat leading edge and airfoil transition areas uniformly. Furthermore, coatings should not be contaminated by excess of oxygen known to adversely affect the fatigue life.

Unlike plasma spray, the electroplating process has a good coating thickness control and has no line of sight limitation. In a series of patents, US-A-5, 558,758, US-A-5, 824,205 and US-A-5,833,829 described the deposition of MCrAlY coatings by electroplated process. The process consists of depositing coatings via a precursor, i.e. CrAlM2 powder in a M1 bath where M2 is one or more of Si, Ti, Hf, Ga, Nb, Mn, Pt and rare earth elements and M1 consists of Ni, Co, Fe alone or in combination. The as-deposited coating is heat-treated to obtain the desired coating structure. Since there is no line of sight limitation a complex contoured surface can be also coated by the electroplated process with good thickness control. However coating by electroplated process appears to be sensitive to composition i.e. not all coatings compositions can be applied effectively by the process.

The reference is made here of electroplated MCrAlY coatings developed by applicant; the patent application on the subject of plated MCrAlY coatings is filed concurrently with this application (internal number B02/46-0 EP) and is included herein by reference.

### SUMMARY OF THE INVENTION

It is object of the present invention to describe a method of depositing a coating resisting to crack during thermal cycling prevalent in the engine with an increased Thermal Mechanical Fatigue (TMF)-Life.

According to the present invention a method was found, comprising the steps of depositing first layer on the external surface of the article and second layer top of the first layer on the external surface of the article, wherein one layer consists of MCrAlY and the other layer consist of β-NiAl and depositing a second layer of the coating which is thinner than the first layer.

The present invention is as well related to a coated article by the inventive method, wherein the article is coated with a first layer on top of the external surface and a second layer on top of the first layer, wherein one layer consists of MCrAlY and the other layer consists of β-NiAl and wherein the second layer is thinner than the first layer.

The layer of β-NiAl can be deposited on the external surface of the article before the layer of MCrAlY is deposited or it can be deposited on top of the layer of MCrAlY.

A bottom layer of β-NiAl 6 has a thickness of 50 to 80 µm, a top layer of β-NiAl 6 has a thickness of 15 to 50 µm, with a preferred range of 15 to 30 µm.

A bottom layer of MCrAlY 7 has a thickness of 15 to 300 µm, with a preferred range of 15 to 100 µm and a most preferred range of 15 to 50 µm, a top layer of MCrAlY 7 has a thickness of 15 to 300 µm, with a preferred range of 15 to 100 µm and a most preferred range of 15 to 50 µm.

The layer of β-NiAl will comprise (wt.-%) 18-24% Al. For a optimized thickness control, the layer of β-NiAl is deposited by an aluminide process.

According the present invention a MCrAlY-coating 7 can have a γ/β- or a γ/γ'-structure. In one example of the invention a γ/β-MCrAlY-coating was deposited comprising (wt.-%) 12.5% Cr, 30% Co, 11.5% Al, 1.3% Si, 0.3% Y, 0.5%Ta, Rest Ni and unavoidable impurities. Said MCrAlY coating was over-aluminised.

In another example of the present invention a-MCrAlY-coating was deposited comprising (wt.-%) 18.5% Cr, 23% Co, 10.5% Al, 0.3% Y Rest Ni and unavoidable impurities.

The deposition of the of the coating-layers can be followed by a heat treatment of 1100°C for 2 to 20 hours in an inert atmosphere, such as argon, air, hydrogen or in a vacuum.

On top of the applied layers a layer of a ceramic thermal barrier coating (TBC) such as yttria-stabilzed zirconia (YSZ) with a suitable composition can be applied by various methods (APS, EB-PVD).

### BRIEF DESCRIPTION OF DRAWINGS

Preferred embodiments of the invention are illustrated in the accompanying drawings, in which
- **Fig. 1**: shows a gas turbine blade,
- **Fig. 2**: one embodiment of a multi-layered-coating on the external surface of the article according to the present invention and
- **Fig. 3**: a second embodiment of a multi-layered-coating on the external surface of the article according to the present invention.

The drawings show only parts important for the invention.

### DETAILED DESCRIPTION OF INVENTION

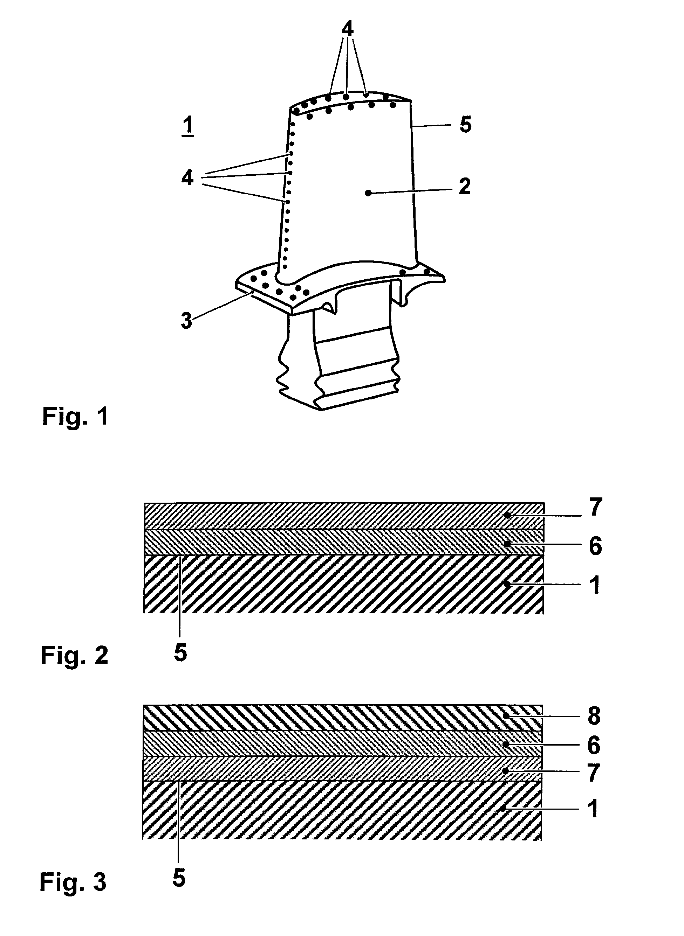

The present invention is generally applicable to components that operate within environments characterised by relatively high temperature, and are therefore subjected to severe thermal stresses and thermal cycling. Notable examples of such components include the high and low pressure vanes and blades, shrouds, combustor liners and augmentor hardware of gas turbine engines. Fig. 1 shows as an example such an article 1 as blades or vanes comprising a blade 2 against which hot combustion gases are directed during operation of the gas turbine engine, a cavity, not visible in Figure 1, and cooling holes 4, which are on the external surface 5 of the component 1 as well as on the platform 3 of the component. Through the cooling holes 4 cooling air is ducted during operation of the engine to cool the external surface 5. The external surface 5 is subjected to severe attack by oxidation, corrosion and erosion due to the hot combustion gases. In many cases the article 1 consists of a nickel or cobalt base super alloy such as disclosed, by way of an example, in US-A-5,759,301. In principle, the article 1 can be single crystal (SX), directionally solidified (DS) or polycrystalline. While the advantages of this invention is described with reference to a turbine blade or vane as shown in Fig. 1, the invention is generally applicable to any component on which a coating system may be used to protect the component from its environment.

As seen in Fig. 2 and 3 it is disclosed a multi-layered coating and the method of depositing the layered coating on the external surface 5 of the article 1. The coating on top of the external surface 5 of the article 1 consists of a layer of MCrAlY 7 and a layer of β-NiAl 6. The layer of β-NiAl 6 can be deposited on top of the external surface 5 of the article 1 before the layer of MCrAlY-coating 7 is deposited as seen in Fig. 2.

In a second embodiment (Fig. 3) the layer of MCrAlY-coating 1 is deposited on top of the article 1 before the layer of β-NiAl 6 is deposited on top of the layer of MCrAlY-coating 7.

A bottom layer of β-NiAl 6 has a thickness of 50 to 80 µm, a top layer of β-NiAl 6 has a thickness of 15 to 50 µm, with a preferred range of 15 to 30 µm.

A bottom layer of MCrAlY 7 has a thickness of 15 to 300 µm, with a preferred range of 15 to 100 µm and a most preferred range of 15 to 50 µm, a top layer of MCrAlY 7 has a thickness of 10 to 300 µm, with a preferred range of 15 to 100 µm and a most preferred range of 15 to 50 µm.

In any case the layer of β-NiAl 6 will comprise (wt.-%) 18-24% Al and it will have a thickness of 15 to 30 um. The layer of β-NiAl 6 is deposited by an aluminide process. The aluminide coating process leads a better control of the thickness, which means that thinner coating can be applied. A lower thickness of that layer is likely to produce the shorter crack and possibly a slower crack growth rate. On the other hand, the electroplated process can deposit a thin MCrAlY coating uniformly. The electroplated process is a viable process to apply a coating uniformly over a turbine blade and vane with a good control of coating thickness and there is no of line of sight limitation in the process. The process also deposits coatings without any excess of oxygen impurity known to be detrimental to fatigue resistance of coating.

It is believed that in a multilayer coating system, thickness of the individual layers as well as the total thickness of the coating are important, because it is generally known that a thin coating is better in fatigue resistance than a thick coating.

In one example of the invention a γ/β-MCrAlY-coating 6 was deposited comprising (wt.-%) 12.5% Cr, 30% Co, 11.5% Al, 1.3% Si, 0.3% Y, 0.5%Ta, Rest Ni and unavoidable impurities. In another example of the present invention a-MCrAlY-coating was deposited comprising (wt.-%) 18.5% Cr, 23% Co, 10.5% Al, 0.3% Y Rest Ni and unavoidable impurities. According the present invention a MCrAlY-coating 7 can have a γ/β- or a γ/γ'-structure. A layer of MCrAlY (7) with a γ/β-structure can contain 0.01 to 3% Fe.

The β-NiAl (6) can contain in addition (wt.-%) 0.01 to 3% Fe and one or a combination of 0.01 to 1.5% Hf, 0 to 0.5% Zr, 0 to 2% Cr.

The layer of MCrAlY-coating 7 can be applied e.g. by at least one of the coating methods of plasma spray, wire arc spray, high velocity oxy-fuel (HVOF), air plasma spray (APS), low pressure plasma spray (LPPS), vacuum plasma spray (VPS), electrolytic or galvanic deposition, Physical Vapour Deposition (PVD), Chemical Vapour Deposition (CVD) or any other suitable methods known in the prior art.

The deposition of the of the coating-layers 6, 7 is following by a heat treatment of 1100°C for 2 to 20 hours in an inert atmosphere, such as argon, air, hydrogen or in a vacuum.

One major advantage of a top layer 6, 7 of either γ/β-type of MCrAlY or of β-NiAl is that due to the high aluminum content they do form a continuous α-alumina film at temperatures above 1000°C.

On top of the applied layers as seen in Fig. 3 a layer 8 of a ceramic thermal barrier coating (TBC) such as yttria-stabilzed zirconia (YSZ), though other ceramic materials and other stabilizer could be used, such as zirconia stabilized by ceria (CeO₂), scandia (Sc₂O₃) or other oxides. The ceramic layer is deposited to a thickness that is sufficient to provide the required thermal protection for the underlying substrate, generally in the order of about 125 to 800 µm.

### Example of the invention

As an example of the invention a coated sample was tested on the Thermal Mechanical Fatigue-Life. The coating thickness was 270 µm of a γ/β-MCrAlY-coating and 30 µm of β-NiAl. The layer of β-NiAl was on top of the γ/β-MCrAlY. It was shown that the Thermal Mechanical Fatigue (TMF) life under the condition of a cycle to 800°C and cooled to 100°C with ε = 0.8% was improved more than 200% with the present layer of β-NiAl 6 in comparison with a sample coated with MCrAlY having a complete thickness of 300 µm without such a layer of β-NiAl. After more than 200% cycles the test were discontinued without any failure.

While our invention has been described by an example, it is apparent that other forms could be adopted by one skilled in the art. Accordingly, the scope of our invention is to be limited only by the attached claims.

### REFERENCE NUMBERS

- 1: Article
- 2: Blade
- 3: Platform
- 4: Cooling holes
- 5: External surface of article 1
- 6: Layer of β-NiAl
- 7: Layer of MCrAlY
- 8: Layer of ceramic coating

## Claims

1. A method of depositing a coating on top of the external surface (5) of an article (1) comprising the steps of
- depositing first layer on the external surface (5) of the article (1) and second layer top of the first layer on the external surface (5) of the article (1), wherein one layer consists of MCrAlY (7) and the other layer consist of β-NiAl (6) and
- depositing the second layer of the coating as a layer which is thinner than the first layer.

2. The method of depositing a coating according to claim 1 or 2, wherein the deposition of the coating-layers (6, 7) is followed by a heat treatment at a temperature in the range from 1000° to 1150°C for 2 to 20 hours in air, argon, hydrogen or in a vacuum.

3. The method of depositing a coating according to claim 1 or 2, comprising the step of depositing the layer of MCrAlY (7) by one or more of an electroplated process, a thermal spray processes, Physical Vapour Deposition (PVD), Chemical Vapour Deposition (CVD) or any other suitable methods known in the prior art.

4. The method of depositing a coating according to claim 1 or 2, comprising the step of depositing the layer of β-NiAl (6) by a plasma spray process, a pack, gas phase diffusion or CVD process or by an electroplated process.

5. The method of depositing a coating according to claim 1 or 2, comprising the step of depositing a layer of a ceramic thermal barrier coating (TBC) on top of both layers of MCrAlY (7) and β-NiAl (6).

6. An article (1) with an external surface (5) coated by a method according to any of the claims 1 to 6, wherein the article (1) is coated with a first layer on top of the external surface (5) and a second layer on top of the first layer, wherein one layer consists of MCrAlY (7) and the other layer consists of β-NiAl (6) and wherein the second layer is thinner than the first layer.

7. The article (1) according to claim 6, wherein the layer of MCrAlY (7) comprises (wt.%) 12.5% Cr, 30% Co, 11.5% Al, 1.3% Si, 0.3% Y, 0.5%Ta, Rest Ni and unavoidable impurities.

8. The article (1) according to claim 6, wherein the layer of MCrAlY (7) comprises (wt.%) 18.5% Cr, 23% Co, 10.5% Al, 0.3% Y Rest Ni and unavoidable impurities.

9. The article (1) according to claim 6, wherein the layer of MCrAlY (7) has a γ/β- or a γ/γ'-structure.

10. The article (1) according to claim 9, wherein the layer of MCrAlY (7) has a γ/β-structure and contains 0.01 to 3% Fe.

11. The article (1) according to claim 6, wherein the layer of β-NiAl (6) comprises (wt.-%) 18-24% Al.

12. The article (1) according to claim 11, wherein the β-NiAl (6) contains (wt.-%) 0.01 to 3% Fe and additions of one or a combination of 0.01 to 1.5% Hf, 0 to 0.5% Zr, 0 to 2% Cr.

13. The article (1) according to claim 6, wherein the bottom layer consists of β-NiAl (6) with a thickness of 50 to 80 µm

14. The article (1) according to claim 6, wherein the bottom layer consists of MCrAlY (7) with a thickness of 15 to 300 µm, with a preferred range of 15 to 100 µm and a most preferred range of 15 to 50 µm.

15. The article (1) according to claim 6, wherein the top layer consists of β-NiAl (6) with a thickness of 15 to 50 µm, with a preferred range of 15 to 30 µm.

16. The article (1) according to claim 6, wherein the top layer consists of MCrAlY (7) with a thickness of 15 to 300 µm, with a preferred range of 15 to 100 µm and a most preferred range of 15 to 50 µm.

17. The article (1) according to any of the claims 6 to 16, wherein a layer of a ceramic thermal barrier coating (TBC) is deposited on top of both layers of MCrAlY (7) and β-NiAl (6).

18. The article (1) according to any of the claims 6 to 16, wherein the article (1) is a single crystal (SX), directionally solidified (DS) article (1) or equiaxed article.
